(19) Europäisches Patentamt
European Patent Office
Office européen des brevets

(11) Publication number: 0 321 097 A2

(12) # EUROPEAN PATENT APPLICATION

(21) Application number: 88310912.6

(51) Int. Cl.⁴: G01L 9/04 , G01L 13/02

(22) Date of filing: 18.11.88

(30) Priority: 16.12.87 US 133761

(43) Date of publication of application: 21.06.89 Bulletin 89/25

(84) Designated Contracting States: DE ES FR GB IT SE

(71) Applicant: THE BABCOCK & WILCOX COMPANY
1010 Common Street P.O. Box 60035
New Orleans Louisiana 70160(US)

(72) Inventor: Kaigler, William Jay
4100 Sweet Briar Drive Apartment F103
Erwin Pennsylvania 15642(US)

(74) Representative: Cotter, Ivan John et al
D. YOUNG & CO. 10 Staple Inn
London WC1V 7RD(GB)

(54) **Pressure sensors.**

(57) A dual sided pressured sensor, which is particularly useful for measuring differential pressures, comprises a diaphragm (10) having top and bottom surfaces (12, 16) with pairs of strain gauges (14, 18) on both these surfaces. The two pairs of strain gauges (14, 18) are substantially at the same radial position on the diaphragm (10) and preferably near its centre (Figure 8a) or near its outer periphery (Figure 10a). The gauges can be connected in a Wheatstone bridge configuration to measure pressures applied to the diaphragm which result in slight bending of the diaphragm. The bending applies compressive and tensile pressures to the two pairs of gauges for changing an electrical characteristic thereof. The electrical characteristic normally changes in a nonlinear fashion. The nonlinearity, however, for the pairs of gauges on the top and bottom surfaces, are of opposite signs and equal magnitude so that they cancel each other to provide an accurate pressure measurement.

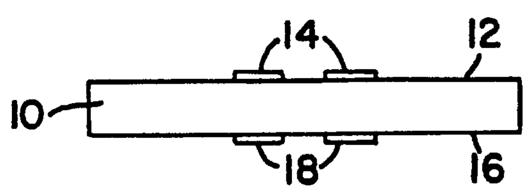


FIG. 8a

EP 0 321 097 A2

# PRESSURE SENSORS

This invention relate to pressure sensors.

Differential pressure transducers have been build using a large variety of sensing devices. Two of today's most common are capacitive sensors and strain gauge sensors mounted on beams. Figure 1 of the accompanying drawings shows a previously proposed capacitive sensor, which includes three diaphragms 2, 4 and 6. The diaphragms 2 and 6 are subjected to pressures P1 and P2 and the diaphragm 4 (the centre one) is not. The volume 8 and 10 between the diaphrams 2, 4 and 6 are filled with dielectric fluid. As a result, two variable capacitors are formed which can be integrated with electronics to form a reliable and accurate sensor. A problem with a sensor such as this is that it is difficult to make the accuracy as good as some other approaches, and static pressure effect can be a problem (see SAMA standard PMC 31.1).

Figure 2 of the accompanying drawings shows a previously proposed strain gauge beam sensor, which represents another commonly used technology for differential pressure sensing. This involves a beam 12 which is coupled to a pressure collecting diaphragm 14. The diaphragm 14 transmits the force created by a pressure P1-P2 to the beam 12. This force is then converted to a strain which is measured by a strain gauge 16. Most commonly, this strain gauge sensor is positioned on the beam in a Wheatstone bridge configuration in order to subject half of the bridge to compressive strain and half to tensile strain. A common problem with this type of sensor is that it can be very difficult and costly to manufacture.

Another type of sensor, which is rarely used in differential pressure applications, is a flat diaphragm sensor. This sensor consists of a flat circular plate which is firmly secured around the outside diameter. The sensing device is some sort of strain sensitive element which can be bonded to the diaphragm. This type of sensor is well known and most commonly used to sense gauge or absolute pressure when high pressures (usually above 6.895 MPa [1000 lbf/in$^2$]) are being measured: see US Patents Nos. US-A-3 341 794 (Stedman); US-A-3 456 226 (Vick) and US-A-3 505 634 (Von Vick).

Gauge or absolute pressure sensors often measure a much higher pressure range than would a differential pressure sensor. Due to the physical characteristics of a flat diaphragm, large membrane stresses develop because the material stretches rather than bends when pressure is applied. This causes the sensor to become more nonlinear when the displacement increases with relation to the thickness of the diaphragm. When the displacement-to-thickness ratio K (referred to as the "K factor") approaches approximately 0.1, the sensor becomes to nonlinear for acceptable performance without linear compensation. The reason this approach is used only on high pressures is that, when a lower pressure is being measured, the strains in the diaphragm must be maintained at a certain level to produce an adequate output. This can only be done by decreasing the thickness of the diaphragm or increasing the radius of the diaphragm. Both will increase the K factor of the diaphragm. As a result, this sensor displays high nonlinearities when used for lower pressure ranges

The most common arrangement for a flat diaphragm sensor, as shown in Figure 3 of the accompanying drawings, is to place four strain sensitive gauges 20 on one side of the diaphragm 22 to respond to compressive, radial strains on the centre and tensile, tangential strains at the outer edge of the diaphragm. The strain gauges 20 are connected in a Wheatstone bridge configuration so that adjacent legs of the bridge sense strains of opposite sign, resulting in an additive effect to the transducer output. The problem with this arrangement is that the gauges placed at the outer edge are subjected to different nonlinearities than the gauges at the centre. These nonlinearities are of opposite sign, but different magnitude, resulting in a nonlinear output from the bridge which is dependent on the K factor.

Recently, ceramic diaphragms with screen printed and fired thick film resistors have attracted interest as pressure transducers: see US-A-4 311 980 (Prudenziati). These ceramic/thick film transducers have been designed in a manner very similar to the transducers before them, with the resistors arranged in a Wheatstone bridge configuration. As with metal or silicon diaphragms, if the sensor is being used for a lower pressure range the K factor must be increased to achieve an adequate output and will become nonlinear.

Thick film resistors change resistance as a function of the average strain over the area of the resistor. Unlike thin-film strain gauges or bonded foil gauges, thick film gauges are sensitive to normal strain. This is the strain produced in the ' Z' direction, normal to the surface of the diaphragm. It is this significant normal strain sensitivity which creates an additional problem for thick film sensors in a differential application. If the gauges are arranged in a similar manner to thin-film strain gauges, with two gauges in the centre and two gauges near the outer edge in order to produce the maximum output from the sensor, the normal strain will vary, depending upon which side of the sensor is pressurised. If the pressure range to be measured happens to be centred around zero, the resulting output will be significantly higher when the pressure is applied to the side of the sensor with the gauges bonded thereto. When the pressure crosses over to the other side of the sensor, the output will decrease and therefore become highly nonlinear. Figure 4 of the accompanying drawings shows this result in the form of a graph.

One of the advantages of using the Wheatstone bridge circuit is that all equal effects would cancel and therefore not affect the output. However, if the normal strain sensitivity is not consistent between each gauge, then the effects would not be equal and the sensor would be bad. To control this problem, with all the gauges on one side of the sensor, the manufacturer must somehow control normal sensitivity.

According to a first aspect of the invention there is provided a pressure sensor comprising:
a diaphragm having first and second surfaces for exposure to a pressure to be measured;
a first pair of strain gauges fixed on said first surface at a selected radial position of the diaphragm; and
a second pair of strain gauges fixed on said second surface substantially at said selected radial position, whereby nonlinear responses of the first and second pairs of strain gauges when the diaphragm is exposed to a pressure of opposite signs and substantially equal magnitudes can substantially cancel each other.

According to a second aspect of the invention there is provided a pressure sensor which utilises a diaphragm, which may be in the form of a disc, having top and bottom surfaces. Strain gauges are provided on both the top and the bottom surfaces of the diaphragm. The strain gauges may be of any known type, for example thin film strain gauges, bonded foil strain gauges, semiconductive gauges and thick film gauges. Appropriate circuitry, such as a Wheatstone bridge arrangement, is connected to the strain gauges. The strain gauges on the top and bottom surfaces are positioned at substantially the same radial position, preferably near the centre of the diaphragm or near the outer periphery of the diaphragm. In this way, the two sets of gauges are subjected to nonlinear conditions which are of opposite sign, but virtually equal magnitude. The nonlinearities thus cancel each other in the bridge.

According to a third aspect of the invention there is provided a pressure sensor which comprises a diaphragm for exposure to a pressure. The diaphragm has a central area and an outer peripheral area and includes top and bottom surfaces. A first pair of strain gauges are provided on the top surface and a second pair of strain gauges are provided on the bottom surface. Both pairs of strain gauges are positioned at substantially the same radial position on the diaphragm, whether on the top of the bottom surface thereof.

Pressure sensors embodying the invention and described hereinbelow are dual sided pressure sensors which can be used for measuring both high absolute pressures and low differential pressures.

The invention will now be further described, by way of illustrative and non-limiting example, with reference to the accompanying drawings, in which references designate like or corresponding parts throughout, and in which:

Figure 1 is a schematic representation of a previously proposed capacitive sensor that includes three diaphragms;

Figure 2 is a schematic view of a previously proposed strain gauge beam sensor;

Figure 3 is a top plan view of a previously proposed flat diaphragm sensor having strain gauges connected in a bridge configuration and applied to one surface of the diaphragm;

Figure 4 is a graph plotting input against output for a thick film strain gauge applied to a diaphragm, illustrating a nonlinear response of such a strain gauge;

Figure 5 is a graph plotting percent radius against deviations in percent of span for a flat diaphragm, showing nonlinear characteristic for both tangential and radial strain;

Figure 6 is a graph plotting percent radius against micro-strain for a flat diagram to show the strain distribution for both radial and tangential strain and both top and bottom surfaces of the diaphragm;

Figure 7 is a graph plotting percent span against deviations for a single-sided gauge to illustrate the nonlinearity of a flat diaphragm sensor, whether the gauges are placed centrally or near the outer periphery of the sensor;

Figure 8a is a side elevational view of a pressure sensor embodying the invention, having gauges near the central area of a diaphragm, on both top and bottom surfaces of the diaphragm;

Figure 8b is a top plan view of the sensor of Figure 8a;

Figure 8c is a botton plan view of the sensor of Figure 8a;

Figure 9 is a graph plotting percent span against deviations for the pressure sensor of Figures 8a to 8c;

Figure 10a is a side elevational view of another pressure sensor embodying the invention, having a diaphragm with strain gauges on top and bottom surfaces thereof, near outer peripheral areas of the top and bottom surfaces;

Figure 10b is a top plan view of the sensor of Figure 10a;

Figure 10c is a bottom plan view of the sensor of Figure 10a; and

Figure 11 is a graph plotting percent span against deviations for the pressure sensor of Figures 10a to 10c.

Figures 8a to 8c and 10a to 10c show respective pressure sensors embodying the invention, each comprising a diaphragm with top and bottom surfaces. Pairs of strain gauges are provided, on both the top and the bottom surfaces, at substantially the same radial position on the diaphragm. By connecting the two pairs of gauges to a bridge, an accurate pressure measurement can be taken since the nonlinear responses of the gauges are equal in magnitude and opposite in sign between the top and the bottom surface of the diaphragm.

The first problem which must be solved if a flat diaphragm sensor is to be a realistic solution for medium or low range differential pressures is the physical characteristic of high nonlinearity which occurs when the K factor is too high. Since a predetermined output must be achieved and the mechanical dimensions of the sensor can only be changed within certain limits, depending upon linearity and output requirements, another solution was needed which was independent of mechanical dimensions.

To find a solution to this problem, the first step was to determine exactly why a flat diaphragm sensor, with a Wheatstone bridge circuit placed on one side, displays nonlinearities.

It was discovered that the radial and tangential nonlinearities are related to the strain at any given point. As a result, the graph produced is very similar to the strain distribution graph for the diaphragm (see Figures 5 and 6). In Figure 5, note that the extreme radial nonlinearities from 50% to 70% radius are a result of calculation errors caused by very small strains in that area. Because of this characteristic, the radial gauges experience different nonlinearities than do the tangential gauges. When these gauges are arranged in a Wheatstone bridge configuration, these values are added together. Since the gauges are seeing different values of nonlinearity, they combine into some total value which can become significant, depending upon the K factor (see Figure 7).

The objective underlying this invention was to provide a sensor which is largely independent of the K factor. To achieve this goal, the nonlinearities to which each gauge is subjected must be of opposite sign, but of virtually equal magnitude. Through further nonlinear analysis, it was observed that the strains display a very similar magnitude from top to bottom, with opposite signs. This is exactly the situation which meets both criteria stated above.

This lends to a new arrangement for the strain gauges on a flat diaphragm sensor. If one half of the Wheatstone bridge was placed in the centre of the diaphragm and the other half at the same radial location, on the reverse side, two of the gauges would be subjected to compressive strains and two to tensile strains. The two most advantageous locations for these gauges would be close to the centre of the outer edge of the diaphragm. Because the average strain would be greater in the centre, the output of the sensor would be greater. If the gauges were near the outside diameter, the gauges could be made more resistive to noise. This design of a flat diaphragm Wheatstone bridge sensor can be done with a variety of different strain sensitive elements, e.g. thin film strain gauges, bonded foil strain gauges, semiconductive gauges and thick film gauges.

As shown in Figures 8a to 8c, a diaphragm 10 in the form of a disc has an upper surface 12, which carries a first pair of strain gauges 14. A bottom surface 16 of the diaphragm 10 carries a second pair of strain gauges 18. The strain gauges 14 and 18 can be connected in a Wheatstone bridge configuration to form a differential pressure measuring sensor or transducer. Figure 9 shows how the nonlinear responses for the upper and lower gauges cancel each other to produce a substantially linear output value. The pressure gauges 14 and 18 are positioned near the central area of the top and bottom surfaces of the diaphragm 10 at substantially the same radial position on the diaphragm.

Figures 10a to 10c show another embodiment, in which a diaphragm 20 in the form of a disc has a top surface 22 carrying a first pair of strain gauges 24, positioned near the outer periphery of the diaphragm. In like fashion, a second pair of strain gauges 28 are provided on a bottom surface 26 of the diaphragm 20 and at the same radial position as the upper gauges 24. Figure 11 shows the cancellation of nonlinear characteristics for the upper and lower strain gauges.

The total resistance change (dR/R) for a thick film resistor forming the strain gauges can be found from:

$$dR/R = CxEx + CyEy + CzEz + Ex - Ey - Ez$$

where Cx, Cy and Cz are resistivity coefficients for strains in the longitudinal, transverse and normal directions to the resistor and Ex, Ey and Ez are strains in the longitudinal, transverse and normal directions to the resistor. Since the resistivity coefficient Cz for normal strain is significant, a flat diaphragm sensor with all gauges placed on one side would give a different output, depending upon which side of the diaphragm the pressure is applied to, unless the normal strain sensitivity was controlled.

The second problem mentioned in the introduction hereto was the normal strain sensitivity of thick film gauges. This characteristic makes using thick film/ceramic diaphragm sensors difficult in differential applications. The dual-sided Wheatstone bridge approach, however, minimises this problem because of its symmetry. When the measured pressure rang is centred around zero, the normal strain sensitivity is not a problem because half of the bridge is always subjected to the direct pressure. Therefore, tight control of the normal sensitivity is no longer necessary.

The most important advantage of the embodiments of the invention described above is that the linearity of the flat diaphragm sensor is independent of the displacement-to-thickness ratio (the K factor). What this means to the differential pressure designer is that one can now raise the strains to the appropriate level needed for a proper output by altering the physical dimensions of the flat diaphragm without affecting the linearity of the sensor. A direct result of this is that the flat diaphragm sensor, which is less expensive and simpler to manufacture, can be used for all pressure ranges from draft range to midrange to high range.

Another advantage of this approach is that the thick film resistor's high sensitivity to normal strain will not create a linearity problem when the measured pressure range crosses zero. This allows one to use ceramic/thick film sensors in differential applications where they will prove to be much less expensive than other approaches and more reliable.

## Claims

1. A pressure sensor comprising:
a diaphragm (10; 20) having first and second surfaces (12, 16; 22, 26) for exposure to a pressure to be measured;
a first pair of strain gauges (14; 24) fixed on said first surface (12; 16) at a selected radial position of the diaphragm; and
a second pair of strain gauges (18; 28) fixed on said second surface (18; 28) substantially at said selected radial position, whereby nonlinear responses of the first and second pairs of strain gauges when the diaphragm is exposed to a pressure of opposite signs and substantially equal magnitudes can substantially cancel each other.

2. A pressure sensor according to claim 1, wherein the selected radial position is near a centre of the diaphragm (10).

3. A pressure sensor according to claim 1, wherein the selected radial position is near an outer periphery of the diaphragm (20).

4. A pressure sensor according to claim 1, claim 2 or claim 3, wherein the first and second pairs of strain gauges (14, 18; 24, 28) are substantially aligned with each other and are of equal areas on said first and second surfaces (12, 16; 22, 26).

FIG. 1

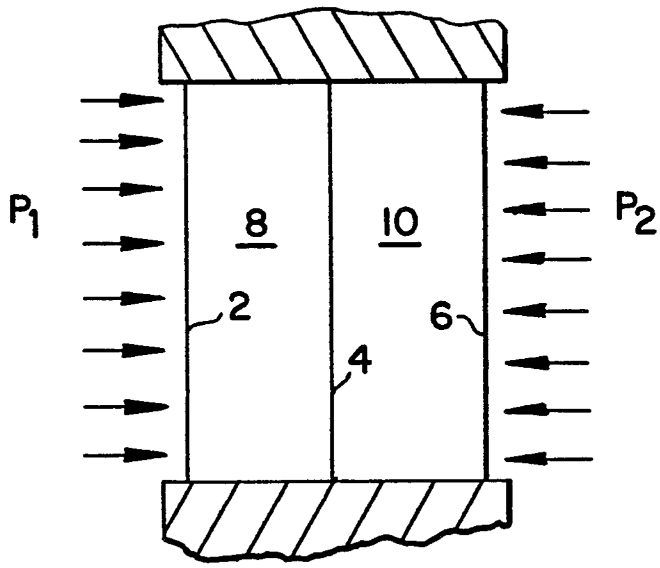


FIG. 2

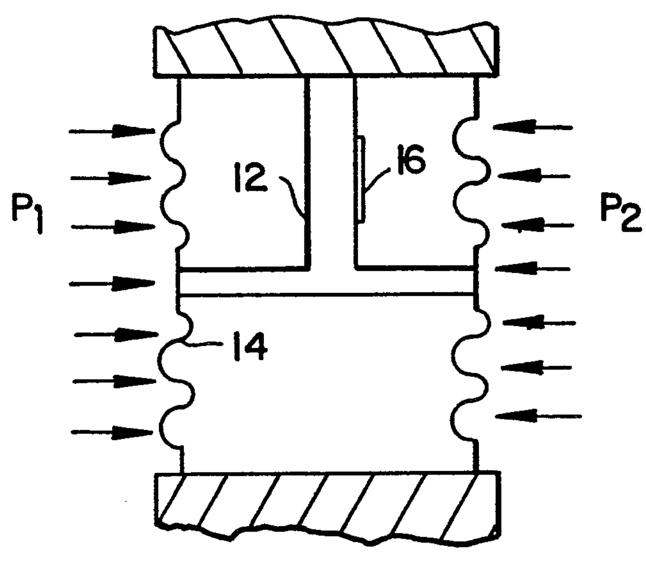

FIG. 3

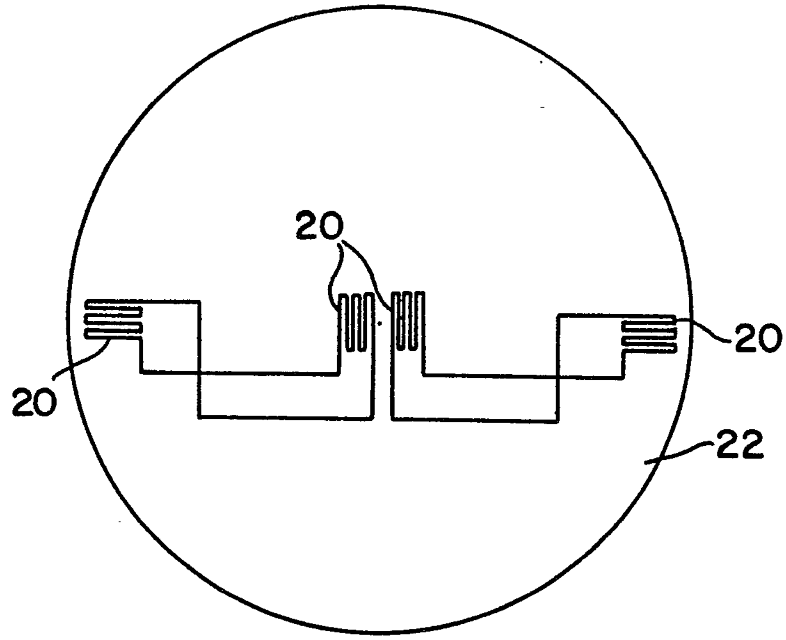
20
20
20
20
22

FIG. 4

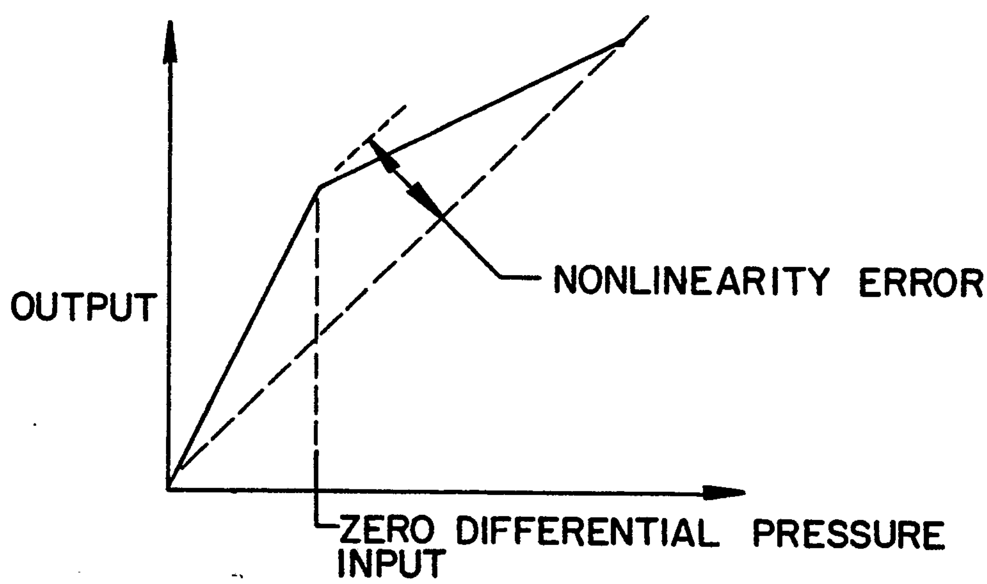
OUTPUT
NONLINEARITY ERROR
ZERO DIFFERENTIAL PRESSURE INPUT

FIG. 5

FLAT DIAPHRAGM LINEARITY
RADIAL POINT VALUES

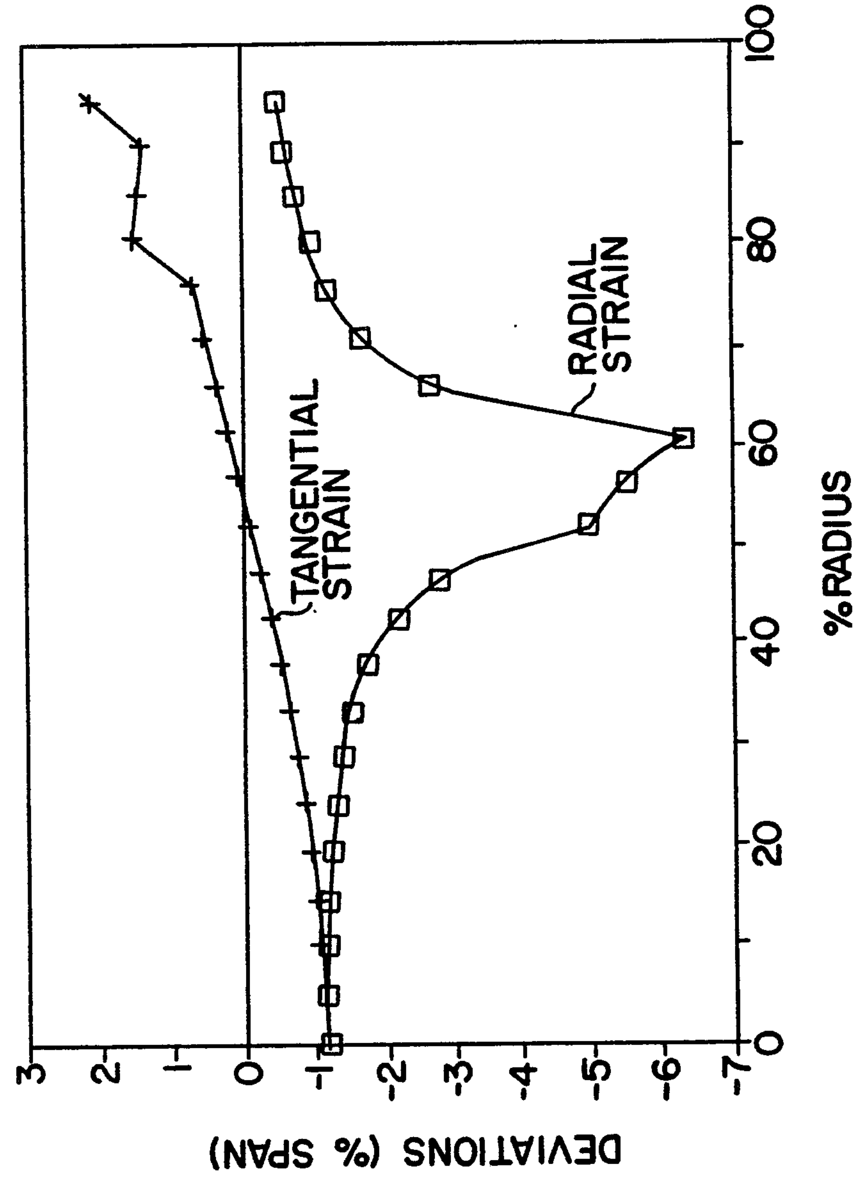

FIG. 6

FLAT DIAPHRAGM STRAIN DIST.

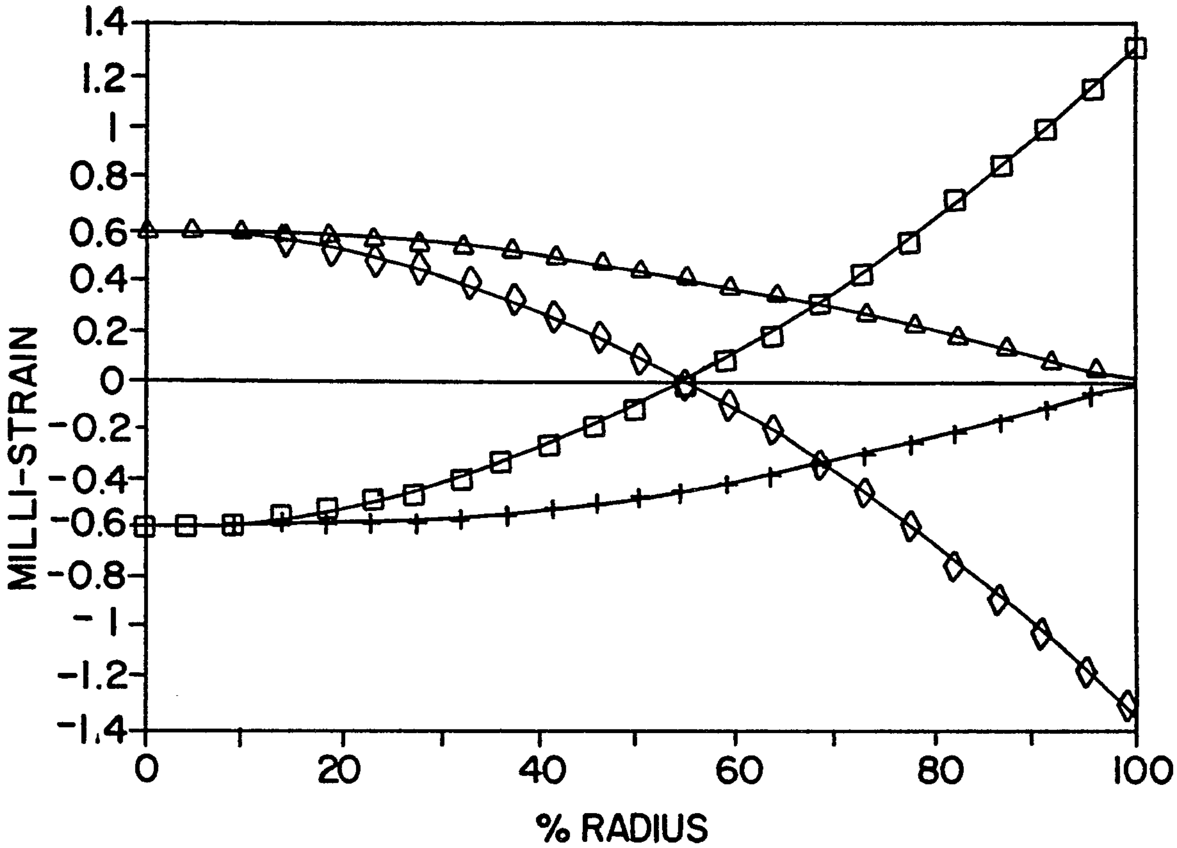


LEGEND: □ TOP SIDE RADIAL STRAIN
+ TOP SIDE TANGENTIAL STRAIN
◊ BOTTOM SIDE RADIAL STRAIN
△ BOTTOM SIDE TANGENTIAL STRAIN

FIG. 7

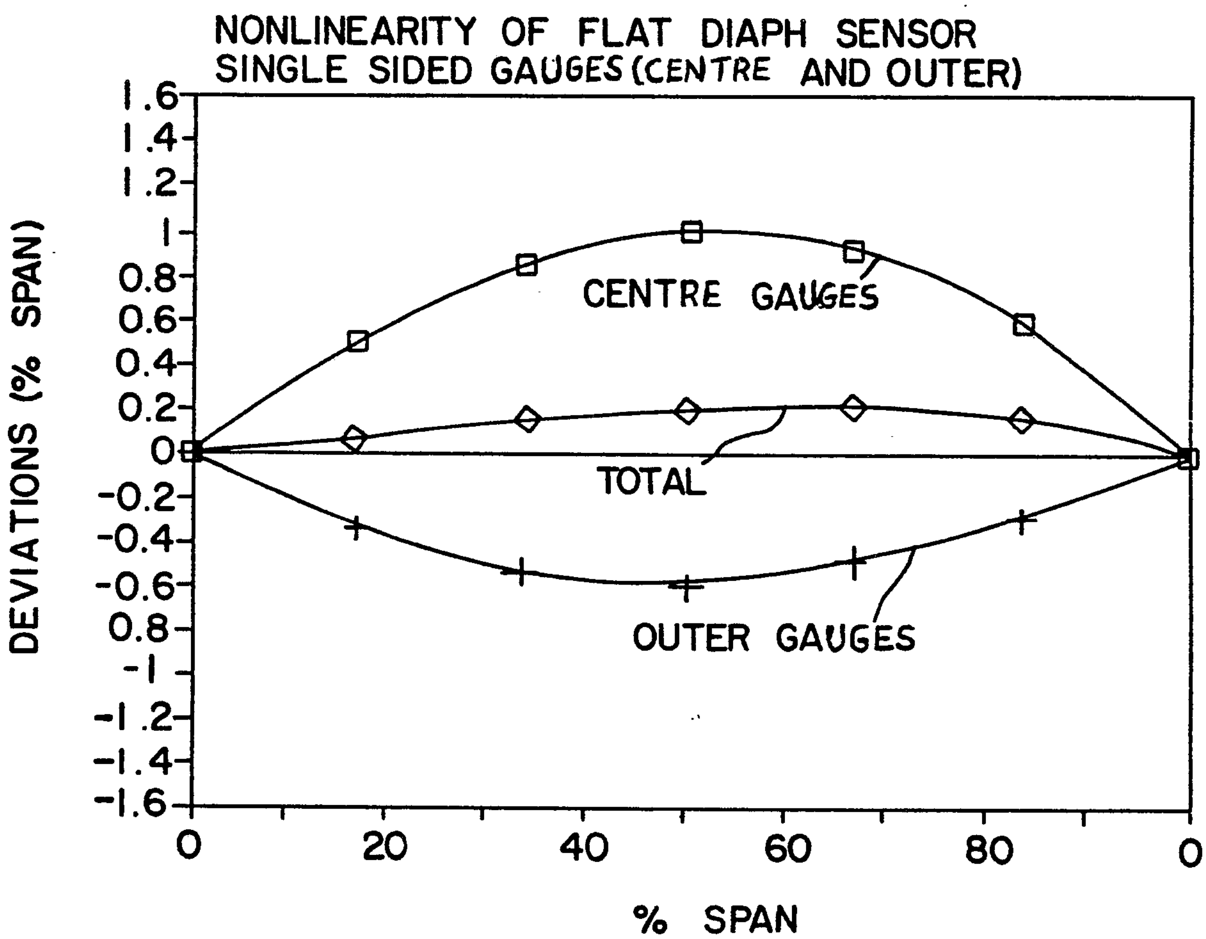
NONLINEARITY OF FLAT DIAPH SENSOR
SINGLE SIDED GAUGES (CENTRE AND OUTER)
1.6
1.4
1.2
1
0.8
0.6
0.4
0.2
0
-0.2
-0.4
-0.6
0.8
-1
-1.2
-1.4
-1.6
DEVIATIONS (% SPAN)
CENTRE GAUGES
TOTAL
OUTER GAUGES
0
20
40
60
80
0
% SPAN

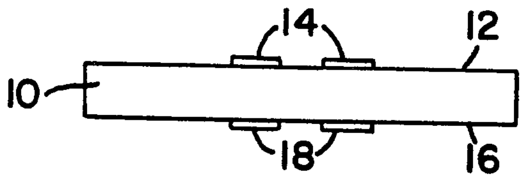


FIG. 8a

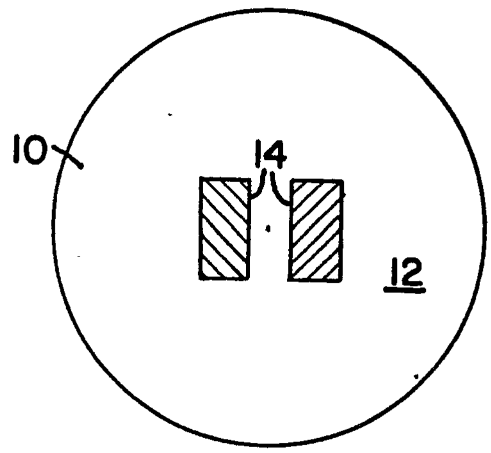


FIG. 8b

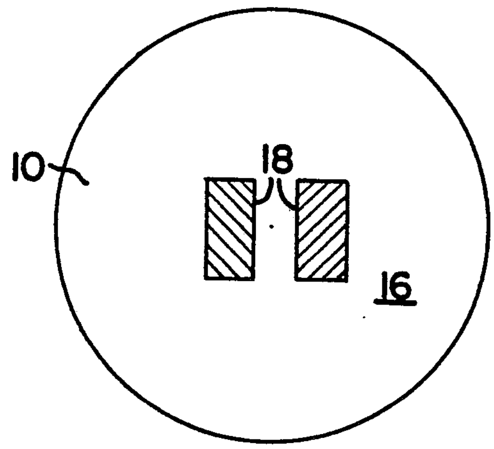


FIG. 8c

FIG. 9

NONLINEARITY OF FLAT DIAPH SENSOR
DUAL SIDED CENTRE GAUGES

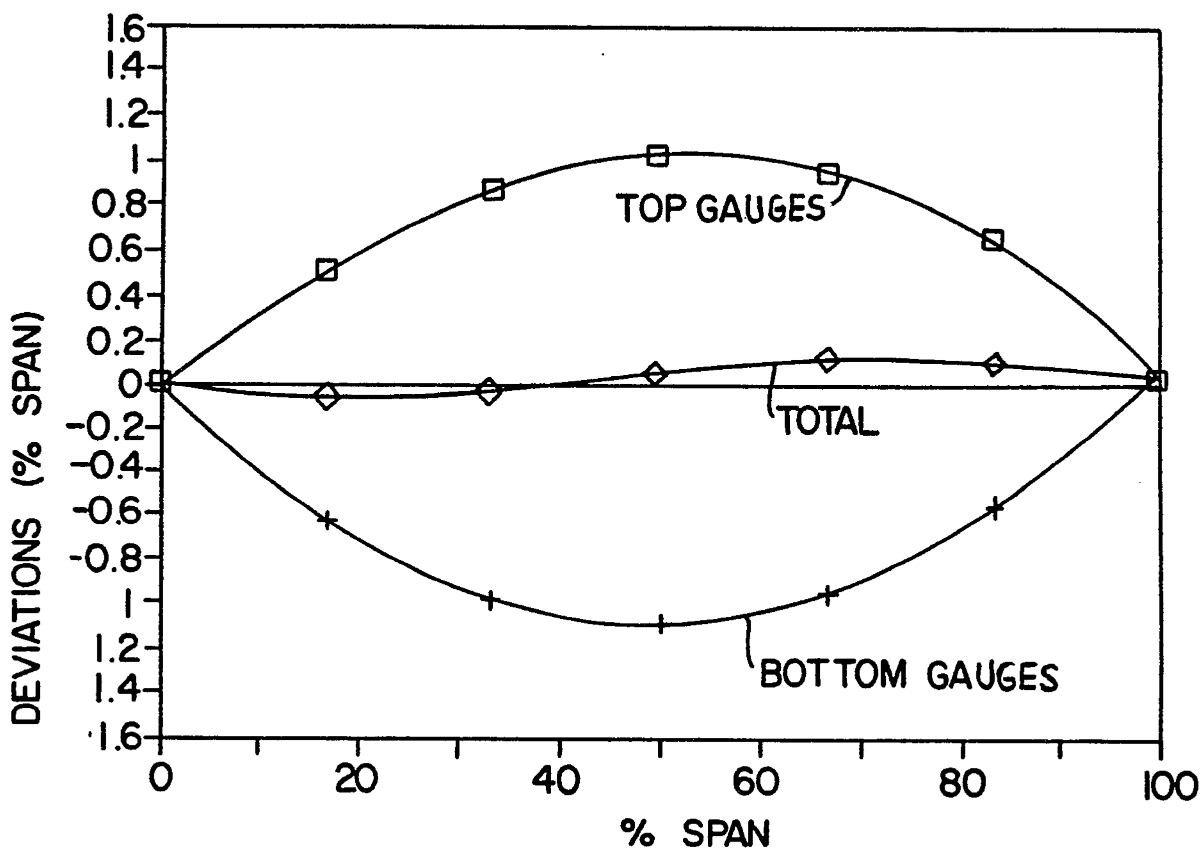

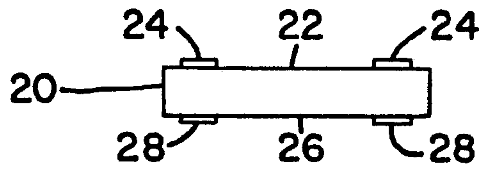


FIG. 10a

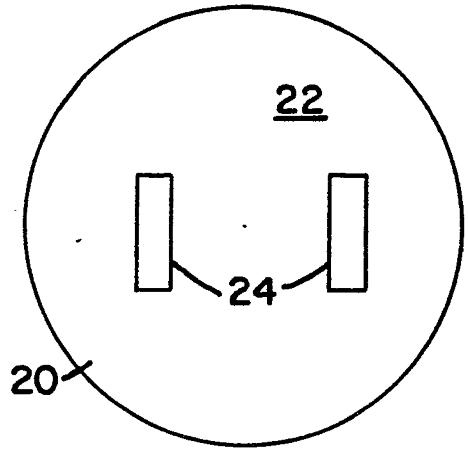


FIG. 10b

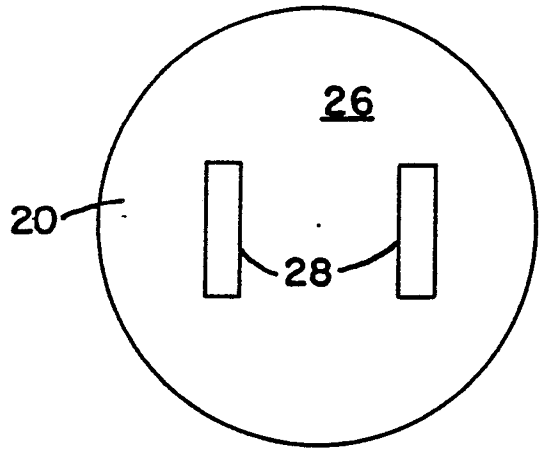


FIG. 10c

FIG. 11

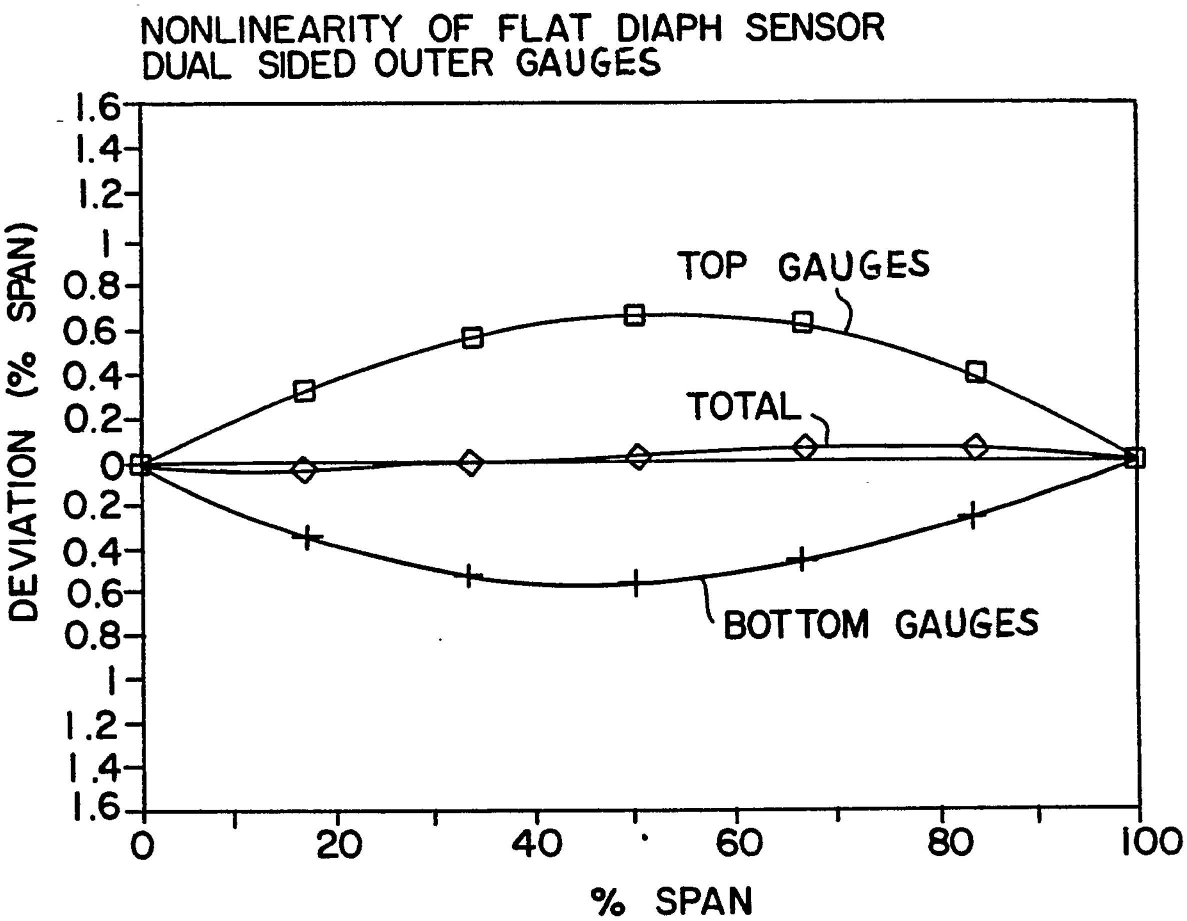
NONLINEARITY OF FLAT DIAPH SENSOR
DUAL SIDED OUTER GAUGES
DEVIATION (% SPAN)
1.6
1.4
1.2
1
0.8
0.6
0.4
0.2
0
0.2
0.4
0.6
0.8
1
1.2
1.4
1.6
0
20
40
60
80
100
% SPAN
TOP GAUGES
TOTAL
BOTTOM GAUGES